# EUROPEAN PATENT SPECIFICATION

(11) **EP 2 291 591 B1**
(45) Date of publication and mention of the grant of the patent: **09.05.2012**
(21) Application number: 09751438.4
(22) Date of filing: 20.05.2009
(51) Int. Cl.: F16K 31/40

(54) **METERING SOLENOID VALVE**
DOSIERMAGNETVENTIL
ELECTROVANNE DE DOSAGE

(30) Priority: 20.05.2008 US 54497 P
(43) Date of publication of application: 09.03.2011
(73) Proprietor: Parker Hannifin Corp., Cleveland, OH 44124-4141 (US)
(72) Inventor: SZYMASZEK, Paul, Necedah, WI 54646 (US)
(74) Representative: Belcher, Simon James
(86) International application number: PCT/US2009/044618
(87) International publication number: WO 2009/143210

(56) References cited:
- GB-A- 1 278 507
- JP-A- 9 178 022
- US-A- 2 020 833
- US-A- 3 057 160

## Description

### TECHNICAL FIELD

The present invention relates, in general, to a metering solenoid valve such as the type used in refrigeration applications, and in particular to a valve that combines a solenoid valve and hand expansion valve into a single valve.

### BACKGROUND

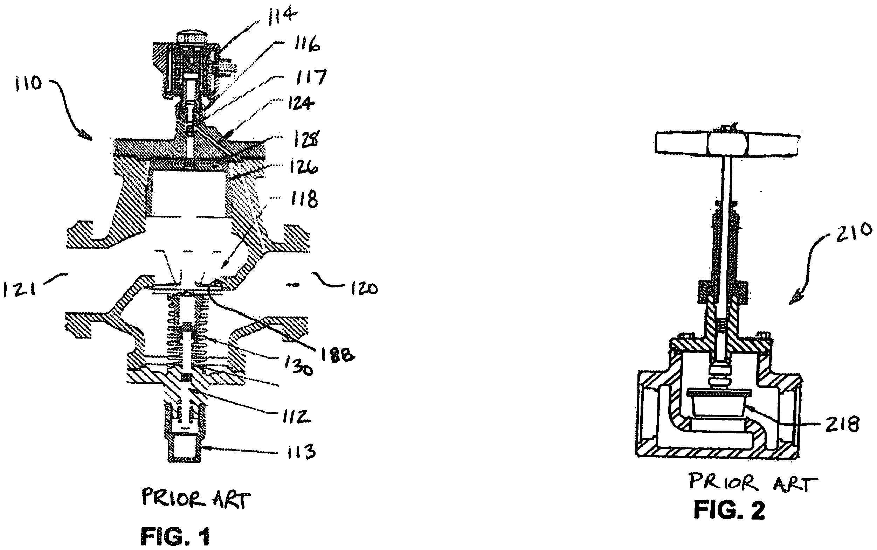

A prior art heavy duty solenoid valve 110 is shown in FIG. 1 as a pilot operated, semi-steel bodied valve suitable for Ammonia, R-12, R-22, and R-502, other refrigerants, certain oils and other fluids approved for use in refrigeration. The valve may be opened by means of the manual opening stem 112 for servicing or in case of electrical power failure (shown covered by cap 113). The valve is a pilot operated solenoid shown in FIG. 1 in its closed position, with the solenoid coil 114 de-energized and the plunger needle 116 and main port plug 118 in the seated position. Electrical energization of the solenoid coil 114 forms a magnetic field, pulling up the plunger which strikes the needle 116, lifting it off its seat 117. Upward motion of the needle 116 permits entrance of the fluid from the valve inlet 120 through the pilot port 124 to the top of the power piston 126. This forces the piston 126 downward and pushes the main port plug 118 open, thereby permitting flow of the refrigerant through the main valve port 188 to the outlet 121. The closing spring meanwhile is held in a compressed position. De-energization of the solenoid coil 114 permits the spring-assisted needle 116 to drop back into its seat 117, stopping the flow through the pilot port 124. Bleed-off, through the bleed hole 128 in the piston 126, decreases the pressure above the piston 126 and allows the closing spring 130 to force the main port plug 118 upward into a closed position to stop the flow. The pressure difference across the valve 110, acting upon the area of the valve seat, plus the force of the closing spring 130, holds the main port plug in a tightly closed position.

The solenoid valves 110 typically require a hand expansion valve to be used in conjunction with the solenoid valve in order to meter the flow of the refrigerant. Referring to FIG. 2, a hand expansion valve 210 is shown having a tapered plug 218 for providing throttling action.

GB-1278507 discloses a fluid-flow valve comprising a casing with an inlet port and a discharge port, and a valve seat between them. A piston bears on the valve seat and so acts as a closure member. A plate is biased against the valve port by means of a spring to close the valve port. The piston engages the plate to displace it so as to provide an annular opening through the valve port.

### SUMMARY

The invention provides a valve assembly as defined in claim 1.

### BRIEF DESCRIPTION OF THE DRAWINGS

Embodiments of this invention will now be described in further detail with reference to the accompanying drawings, in which:
FIG. 1 is a cross-sectional view of a prior art solenoid valve;
FIG. 2 is a cross-sectional view of a prior art hand expansion valve;
FIG. 3 is a perspective, cross-sectional view of an embodiment of the metering solenoid valve in accordance with the present invention;
FIG. 4 is a cross-sectional view of an embodiment of the metering solenoid valve in accordance with the present invention in a closed position; and
FIG. 5 is a cross-sectional view of an embodiment of the metering solenoid valve in accordance with the present invention in an open position.

### DETAILED DESCRIPTION

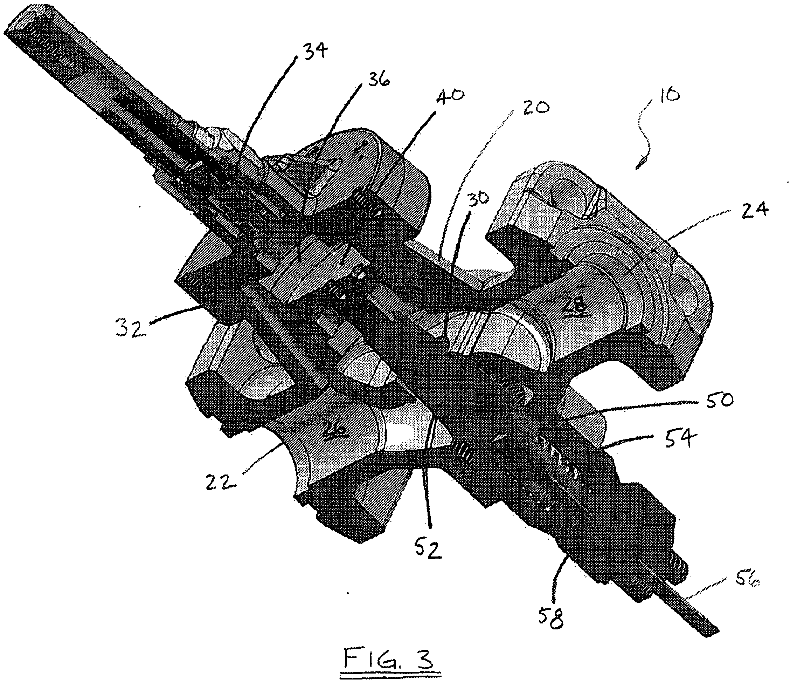

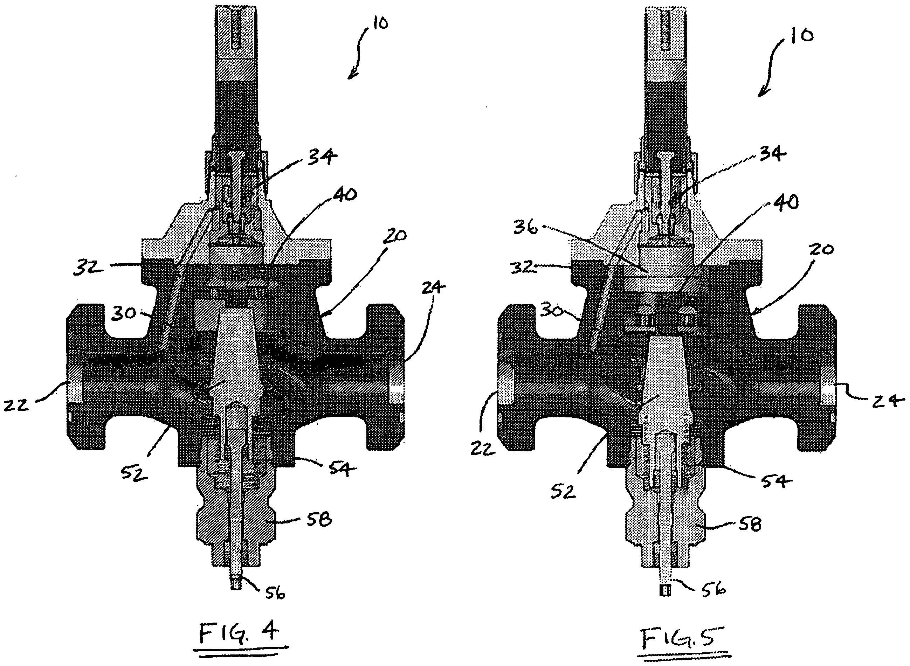

An embodiment of the present invention is shown in FIG. 3 as a metering solenoid valve assembly 10 in a perspective cross-sectional view and for additional clarity, in FIG. 4 as a cross-sectional view in a closed position and in FIG. 5 as a cross-sectional view in an open position. The valve assembly 10 comprises a housing 20 having an inlet 22, an outlet 24, an inlet passageway 26, an outlet passageway 28 and a through port 30 providing a fluid passageway between the inlet passageway 26 and the outlet passageway 28. As with the prior art solenoid valve, the inlet passageway 26 includes a by-pass port 32 which extends to a solenoid 34 which when energized allows fluid to flow to a chamber 36 above a piston 40. The valve assembly 10 also includes a metering/manual open plug assembly 50 comprising a plug 52, a closing spring 54, a manual opening stem 56, and an adjustable stem housing 58. The metering/manual open plug assembly 50 combines the functionality of the manual open plug of the solenoid valve and the metering function of the hand expansion valve. In operation, the fluid entering chamber 36 forces piston 40 into the housing 20. The piston engages the plug 52 which moves against the force of the closing spring 54 and opens the through port 30. The plug 52 is limited in the distance that it is able to move. The end of the plug 52 engages a stop surface of the stem housing 58. The stem housing 58 is adjustably positioned by threadably setting the depth of the step housing 58 into housing 20, allowing the amount of flow through the port 30 to be adjusted due to the geometrical shape of the plug 52. It is noted that the plug 52 shown is tapered in a generally frustoconical shape that extends a distance through the port 30 such that even when the port 30 is open, the plug 52 does not allow full flow through the port 30 and that an annular opening is formed.

The valve 10 may be opened by means of the manual opening stem 56 for servicing or in case of electrical power failure. The manual opening stem 56 has a head portion 57 which is coupled to the plug 52. The stem 56 is threadably engaged by the stem housing 58 such that the valve 10 can be opened by rotating the stem 56. The stem 56 retracts the plug 52 against the spring force to open the port 30.

Optionally, the piston has a bleed hole fluidly connecting the valve outlet to a piston cylinder volume above the piston.

The combination of the solenoid valve and the metering valve into a single valve can save in manufacturing costs, inventories, additional welds for two components, etc.

## Claims

1. A valve assembly comprising:
a housing (20) having a valve inlet (22) and a valve outlet (24),
a valve port (30) between the valve inlet and the valve outlet,
a piston (40) reciprocable within the housing,
a plug (52) formed generally in a frustoconical shape and positioned in the housing such that at least a portion of the plug extends through the valve port,
a spring (54) biasing the plug against the valve port such that the plug prevents flow through the valve port,
in which the piston has a portion that engages an end of the plug when the piston moves toward the plug, and the plug is moveable by the piston to provide an annular opening through the port, at least a portion of the plug is positioned in the valve port when the plug is in a fully retracted position,
**characterised in that** a bypass fluid passageway (32) fluidly connects the valve inlet to a chamber (36) above the piston, the bypass fluid passageway being selectively opened and closed by a solenoid valve (34) attached to the valve housing.

2. The valve of claim 1, in which the piston has a bleed hole fluidly connecting the valve outlet to a piston cylinder volume above the piston.

3. The valve of claim 1 further comprising a manual opening system (56) including a stem housing (58) attached to the valve housing, a stem (56) having a head portion (57) coupled to the plug (52), the manual opening stem threadably engaged by the stem housing such that the valve can be opened by rotating the stem.

4. The valve of claim 3 wherein the stem housing (58) is adjustably attached to the housing, the stem housing adjustably positioned by threadably setting the depth of the stem housing into housing (20), allowing the amount of flow through the valve port (30) to be adjusted due to the frustoconical shape of the plug (52).

## Patentansprüche

1. Ventilanordnung umfassend
ein Gehäuse (20) mit einem Ventileinlass (22) und einem Ventilauslass (24),
einen Ventilsitz (30) zwischen dem Ventileinlass und dem Ventilauslass,
einen innerhalb des Gehäuses hin und her beweglichen Kolben (40),
einen Zapfen (52), der im Wesentlichen kegelstumpfförmig ausgebildet ist und derart in dem Gehäuse angeordnet ist, dass zumindest ein Abschnitt des Zapfens sich durch den Ventilsitz hindurch erstreckt,
eine Feder (54), die den Zapfen derart gegen den Ventilsitz vorspannt, dass der Zapfen einen Durchfluss durch den Ventilsitz verhindert,
wobei der Kolben einen Abschnitt hat, der an einem Ende des Zapfens angreift, wenn der Kolben sich in Richtung des Zapfens bewegt, und der Zapfen durch den Kolben beweglich ist, um eine ringförmige Öffnung durch den Sitz bereitzustellen, wobei zumindest ein Abschnitt des Zapfens in dem Ventilsitz angeordnet ist, wenn sich der Zapfen in einer vollständig eingefahrenen Stellung befindet,
**dadurch gekennzeichnet, dass** ein Fluid-Bypass-Durchgang (32) den Ventileinlass fluidisch mit einer Kammer (36) über dem Kolben verbindet, wobei der Fluid-Bypass-Durchgang durch ein an dem Ventilgehäuse befestigtes Solenoidventil (34) wahlweise geöffnet und geschlossen wird.

2. Ventil nach Anspruch 1, bei dem der Kolben ein Leckageloch aufweist, das den Ventilauslass fluidisch mit einem Kolbenzylindervolumen über dem Kolben verbindet.

3. Ventil nach Anspruch 1, das ferner ein System (56) zum manuellen Öffnen aufweist, welches ein Stangengehäuse (58), das am Ventilgehäuse befestigt ist, und eine Stange (56) mit einem Kopfabschnitt (57) umfasst, der an den Zapfen (52) gekoppelt ist, wobei die manuelle Öffnungsstange derart über ein Gewinde mit dem Stangengehäuse im Eingriff steht, dass das Ventil durch Drehen der Stange geöffnet werden kann.

4. Ventil nach Anspruch 3, bei welchem das Stangengehäuse (58) einstellbar an dem Gehäuse befestigt ist, wobei das Stangengehäuse einstellbar angeordnet ist, indem die Tiefe des Stangengehäuses in dem Gehäuse (20) durch Schrauben festegelegt wird, wodurch die Durchflussmenge durch den Ventilsitz (30) hindurch aufgrund der kegelstumpfförmigen Form des Zapfens (52) eingestellt werden kann.

## Revendications

1. Ensemble de soupape comprenant :
un boîtier (20) ayant une entrée de soupape (22) et une sortie de soupape (24),
un orifice de soupape (30) entre l'entrée de soupape et la sortie de soupape,
un piston (40) effectuant un mouvement de va-et-vient à l'intérieur du boîtier,
un bouchon (52) formé généralement selon une forme tronconique et positionné dans le boîtier de sorte qu'au moins une partie du bouchon s'étend à travers l'orifice de soupape,
un ressort (54) sollicitant le bouchon contre l'orifice de soupape de sorte que le bouchon empêche l'écoulement à travers l'orifice de soupape,
dans lequel le piston a une partie qui met en prise une extrémité du bouchon lorsque le piston se déplace vers le bouchon, et le bouchon est mobile grâce au piston afin de fournir une ouverture annulaire à travers l'orifice, au moins une partie du bouchon est positionnée dans l'orifice de soupape lorsque le bouchon est dans une position complètement rétractée,
**caractérisé en ce qu'**une voie de passage de fluide de dérivation (32) raccorde de manière fluide l'entrée de soupape à une chambre (36) au-dessus du piston, la voie de passage de fluide de dérivation étant sélectivement ouverte et fermée par une électrovanne (34) fixée sur le boîtier de soupape.

2. Soupape selon la revendication 1, dans laquelle le piston a un trou de purge raccordant de manière fluide la sortie de soupape à un volume de cylindre de piston au-dessus du piston.

3. Soupape selon la revendication 1, comprenant en outre un système d'ouverture manuelle (56) comprenant un boîtier de tige (58) fixé sur le boîtier de soupape, une tige (56) ayant une partie de tête (57) couplée au bouchon (52), la tige d'ouverture manuelle étant mise en prise par filetage par le boîtier de tige de sorte que la soupape peut être ouverte en faisant tourner la tige.

4. Soupape selon la revendication 3, dans laquelle le boîtier de tige (58) est fixé de manière ajustable au boîtier, le boîtier de tige étant positionné de manière ajustable en déterminant par filetage la profondeur du boîtier de tige dans le boîtier (20), permettant d'ajuster la quantité d'écoulement à travers l'orifice de soupape (30) en raison de la forme tronconique du bouchon (52).
